# FASCICULE DE BREVET EUROPEEN

(11) **EP 1 426 001 B1**
(45) Date de publication et mention de la délivrance du brevet: **07.12.2005**
(21) Numéro de dépôt: 03356183.8
(22) Date de dépôt: 20.11.2003
(51) Int. Cl.: A47J 36/14

(54) **Appareil électrique de cuisson comportant une cuve associée a un dispositif de versement**
Elektrisches Kochgerät mit einem Behälter mit Ausgiessvorrichtung
Electrical cooking appliance with a bowl having a pouring device

(30) Priorité: 06.12.2002 FR 0215458
(43) Date de publication de la demande: 09.06.2004
(73) Titulaire: SEB S.A., 69130 Ecully (FR)
(72) Inventeur: Dirand, Pascal, 21160 Marsannay-la-Côte (FR)
(74) Mandataire: Kiehl, Hubert

(56) Documents cités:
- BE-A- 1 013 920
- DE-A- 10 006 730
- FR-A- 1 052 038
- US-A- 2 774 524
- US-A- 5 388 732

## Description

La présente invention concerne le domaine technique des appareils électriques de cuisson comportant un boîtier dans lequel est montée une cuve prévue pour recevoir un bain de cuisson. La présente invention concerne notamment, mais non exclusivement, les friteuses électriques.

Les appareils électriques de cuisson du type précité peuvent comporter une cuve montée fixe dans le boîtier, ou une cuve montée amovible dans le boîtier. Les appareils à cuve fixe présentent une construction plus économique mais sont d'une commodité d'emploi moindre que les appareils à cuve amovible. En effet le versement du bain de cuisson hors de la cuve de l'appareil est plus malaisé pour les appareils à cuve fixe.

Il est connu de réaliser un appareil de cuisson comportant une cuve montée fixe dans un boîtier. Le boîtier présente un rebord supérieur entourant le bord de la cuve, le rebord supérieur du boîtier s'élevant plus haut que la cuve à l'exception d'une échancrure prévue pour le montage de l'articulation du couvercle. Le couvercle est monté amovible par rapport au boîtier. L'échancrure permet de faciliter le versement du bain de cuisson contenu dans la cuve. Toutefois cette disposition permet des écoulements du bain de cuisson le long de la paroi latérale du boîtier, notamment à la fin de l'opération de versement.

Un appareil selon le préambule de la revendication 1 est connu du document BE 1 013 920.

L'objet de la présente invention est de proposer un appareil électrique de cuisson comportant une cuve montée fixe dans un boîtier, dans lequel le versement du bain de cuisson est facilité.

Cet objet est atteint avec un appareil électrique de cuisson comportant une cuve montée dans un boîtier présentant une ouverture supérieure, un rebord périphérique supérieur entourant l'ouverture supérieure, une échancrure étant ménagée dans le rebord périphérique supérieur, caractérisé en ce qu'il comporte un accessoire de versement amovible susceptible d'être monté dans l'échancrure. Cette disposition permet de faciliter le versement du bain de cuisson contenu dans la cuve. Le caractère amovible de l'accessoire de versement facilite la réalisation de la cuve et/ou du boîtier.

Selon une forme de réalisation avantageuse, l'accessoire de versement monté dans l'échancrure présente une zone de collecte débouchant dans l'échancrure, la zone de collecte communiquant avec une zone de versement débouchant à l'extérieur de la cuve et du boîtier. D'autres formes de réalisation peuvent être envisagées, notamment une zone de collecte obturant partiellement ou totalement la cuve ou le rebord périphérique supérieur du boîtier.

Avantageusement alors, la zone de versement est proéminente par rapport au boîtier lorsque l'accessoire de versement est monté dans l'échancrure. Cette disposition contribue à éviter la retombée de gouttes du bain de cuisson sur la paroi latérale du boîtier.

Avantageusement encore l'accessoire de versement comporte des parois latérales convergeant vers la zone de versement. Cette disposition contribue à accélérer la vitesse d'écoulement et permet d'obtenir un jet s'écartant davantage de la paroi latérale du boîtier.

Avantageusement alors les parois latérales sont reliées par une paroi supérieure. Cette disposition contribue à rigidifier l'accessoire d'écoulement. Cette disposition contribue aussi à canaliser le jet d'écoulement. Cette disposition facilite aussi la préhension en permettant de saisir l'accessoire de versement entre la paroi supérieure et la paroi inférieure. De plus la paroi supérieure peut être agencée de manière à ne pas augmenter l'encombrement de l'accessoire de versement, ce qui facilite le rangement.

Avantageusement encore l'échancrure présente un seuil plus élevé que la zone de collecte de l'accessoire de versement monté dans l'échancrure. Cette disposition permet d'éviter de créer des turbulences dans le liquide du bain de cuisson lors de l'entrée dans la zone de collecte.

Avantageusement encore l'accessoire de versement présente une conformation transversale prévue pour coopérer avec une conformation longitudinale ménagée dans l'échancrure. Cette disposition permet une mise en place aisée de l'accessoire de versement. Cette disposition permet également de simplifier la construction de l'appareil. Cette disposition contribue à la réalisation de l'étanchéité entre l'accessoire de versement et l'échancrure. L'utilisation d'un joint peut toutefois être envisagée si nécessaire.

Avantageusement l'accessoire de versement présente un crochet de retenue prévu pour coopérer avec un ressaut ménagé dans une paroi du boîtier.

Avantageusement alors, pour faciliter la mise en place de l'accessoire de versement, une patte élastique relie le crochet de retenue à une paroi inférieure de l'accessoire de versement.

Avantageusement encore, pour faciliter le retrait de l'accessoire de versement, une languette de déverrouillage est montée sur la patte élastique.

Selon une forme de réalisation avantageuse, le rebord périphérique supérieur appartient au boîtier. Selon d'autres formes de réalisation, le rebord périphérique supérieur peut appartenir au moins partiellement à la cuve, notamment lorsque la cuve est réalisée par moulage. L'échancrure peut alors être réalisée dans le bord supérieur de la cuve.

Selon une disposition avantageuse, l'appareil comporte un dispositif amovible par rapport au boîtier, ledit dispositif comprenant un support susceptible d'être mis en place dans l'échancrure. Ainsi il n'est pas nécessaire de prévoir une échancrure spécifique pour la mise en place de l'accessoire de versement. Le support peut notamment appartenir à un dispositif de monte et baisse d'un panier disposé dans la cuve, ou à un dispositif d'articulation d'un couvercle associé au boîtier.

Selon une forme de réalisation avantageuse, l'appareil comporte un couvercle prévu pour fermer le boîtier.

Avantageusement alors, pour faciliter le versement, le couvercle est monté amovible par rapport au boîtier.

Avantageusement encore, le couvercle est monté articulé par rapport au boîtier et l'échancrure est disposée à l'opposé de l'articulation du couvercle par rapport à l'ouverture supérieure. Le couvercle est alors de préférence amovible. Cette disposition permet notamment d'utiliser la même échancrure pour le support d'un dispositif de monte et baisse d'un panier de cuisson et pour l'accessoire de versement.

Avantageusement encore l'appareil comporte un logement prévu pour recevoir l'accessoire de versement, pour le rangement.

Avantageusement alors, le couvercle peut comporter ledit logement. Avantageusement encore, le logement est fermé par un capot.

L'invention sera mieux comprise à l'étude d'un exemple de réalisation, pris à titre nullement limitatif, illustré dans les figures annexées, dans lesquelles :
- la figure 1 est une vue d'un exemple de réalisation d'un appareil de cuisson selon l'invention, dans laquelle un capot et un accessoire de versement sont représentés de manière éclatée par rapport au reste de l'appareil,
- la figure 2 est une vue de l'appareil montré à la figure 1, dans laquelle le couvercle de l'appareil a été retiré et dans laquelle le panier de cuisson et le dispositif de monte et baisse sont représentés de manière éclatée par rapport au reste de l'appareil.
- la figure 3 est une vue de l'appareil montré à la figure 2, dans laquelle le panier de cuisson et le dispositif de monte et baisse ont été remplacés par un accessoire de versement.
- la figure 4 est une vue de l'appareil montré à la figure 3, dans laquelle l'accessoire de versement est en place dans l'appareil.
- la figure 5 est une vue en coupe longitudinale de l'appareil montré à la figure 4, dans laquelle la partie inférieure du boîtier n'est pas représentée.

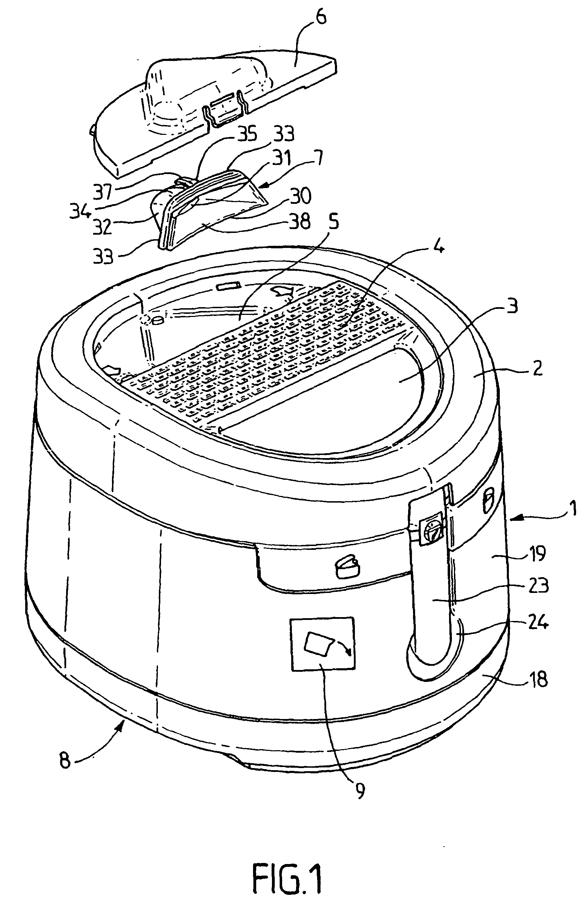

La figure 1 montre une friteuse comportant un boîtier 1 fermé par un couvercle 2. Le couvercle 2 est monté amovible par rapport au boîtier 1. Le couvercle 2 comporte un hublot 3, un dispositif de filtration 4 et un logement 5 fermé par un capot amovible 6. Le logement 5 est prévu pour recevoir un accessoire de versement 7. Le boîtier 1 comporte deux moyens de préhension 8 agencés de manière diamétralement opposée, dont un seul est visible à la figure 1. Les moyens de préhension sont ménagés dans un socle 18 du boîtier 1. Le socle 18 est surmonté d'une jupe 19.

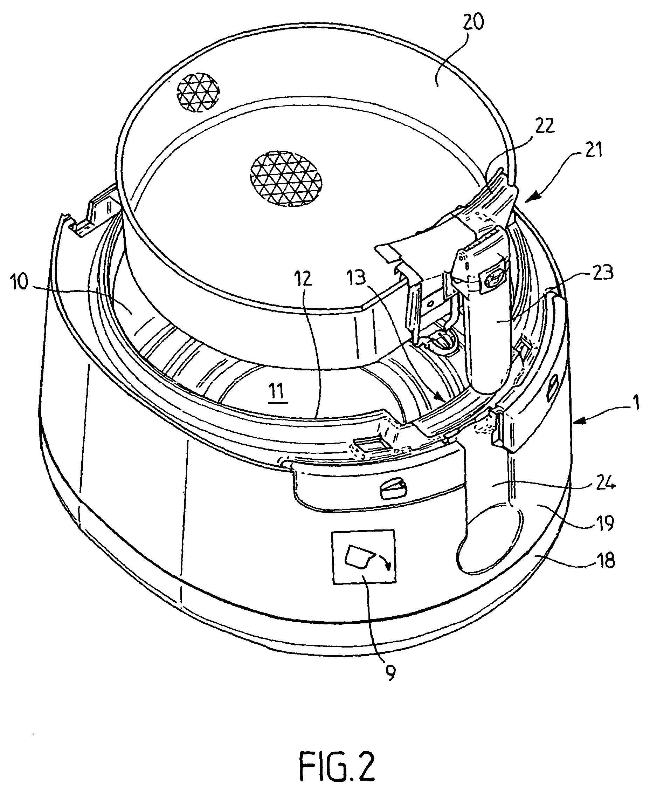

Tel que montré à la figure 2, une cuve 10 est logée dans le boîtier 1. La cuve 10 est associée à des moyens de chauffe. Le boîtier 1 présente une ouverture supérieure 11 délimitée par un rebord périphérique supérieur 12. La cuve 10 est montée dans l'ouverture supérieure 11 du boîtier 1. Le rebord 12 prolonge la cuve 10. Une échancrure 13 est ménagée dans le rebord 12. L'échancrure 13 est prévue pour recevoir un support 22 d'un dispositif 21 de monte et baisse d'un panier 20 ajouré. L'échancrure 13 est disposée à l'opposé de l'articulation du couvercle 2 sur le boîtier 1.

Une poignée 23 permet la manipulation du panier 20 placé dans la cuve 10 ainsi que le déplacement du support 22 par rapport au boîtier 1. La figure 2 représente la poignée 23 occupant une position abaissée correspondant à la position basse du panier 20. Le boîtier 1 présente sur sa paroi latérale une dépression 24 prévue pour le logement de la poignée 23 en position abaissée lorsque le support 22 est en place dans l'échancrure 13.

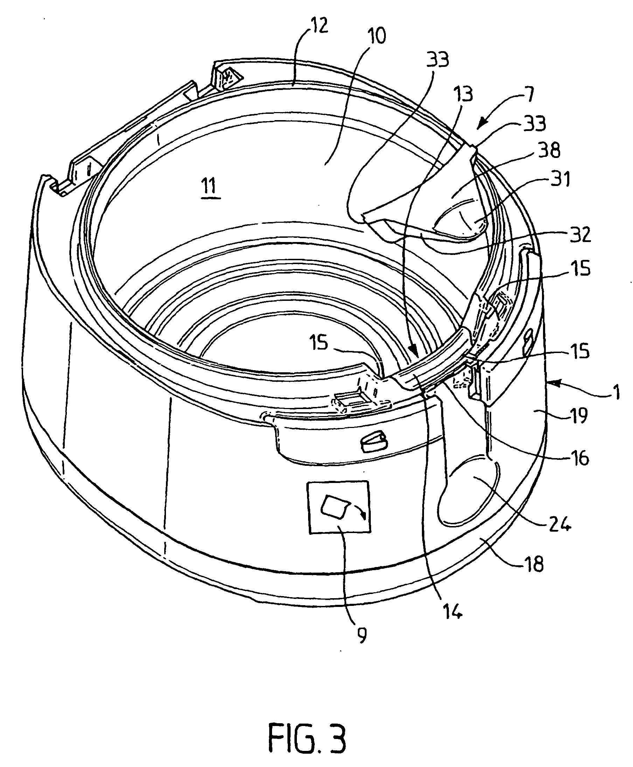

Tel que mieux visible à la figure 3, l'échancrure 13 présente un seuil 14. Une conformation longitudinale 15 est agencée dans l'échancrure 13 entre le seuil 14 et la paroi extérieure du boîtier 1. La conformation longitudinale 15 est formée par une rainure longitudinale. Un ressaut 16 est ménagé dans la paroi latérale du boîtier 1, dans la dépression 24.

L'accessoire de versement 7 montré aux figures 1 et 3 présente une zone de collecte 30 et une zone de versement 31 définies par deux parois latérales 32 reliées par une paroi inférieure 34. Les parois latérales 32 convergent vers la zone de versement 31. L'accessoire de versement 7 présente sur les faces externes des parois latérales 32 et inférieure 34 une conformation transversale 33 prévue pour coopérer avec la conformation longitudinale 15 ménagée dans l'échancrure 13. La conformation transversale 33 relie les parois extérieures latérales 32 en passant par la paroi inférieure 34. Une conformation transversale 33 est formée par une nervure transversale.

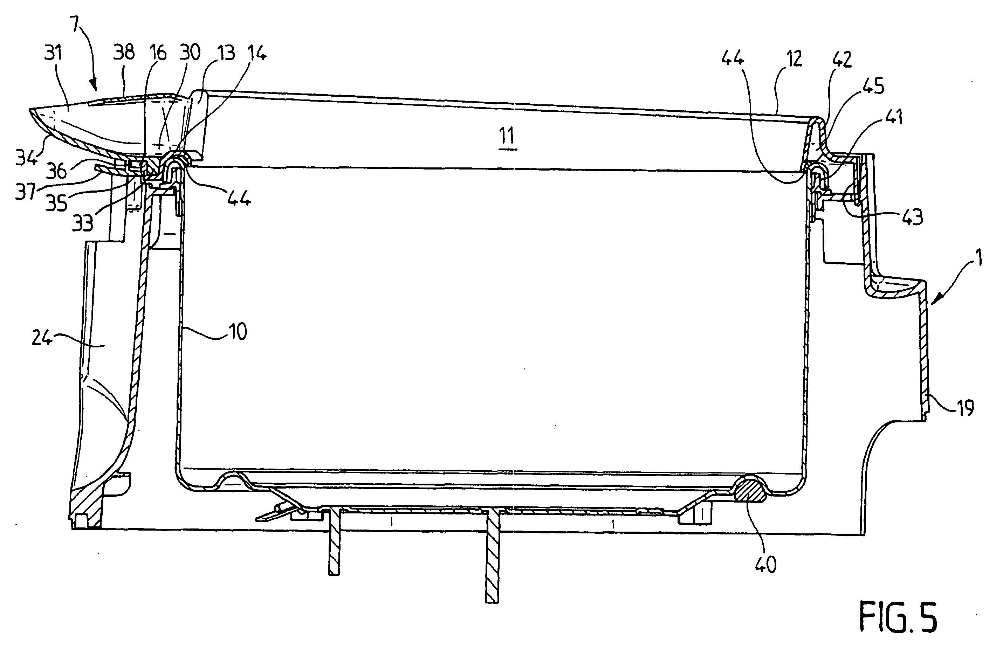

L'accessoire de versement 7 présente un crochet de retenue 35 disposé sous la paroi inférieure 34, visible aux figures 1 et 5. Une patte élastique 36 relie la paroi 34 au crochet 35 et à une languette de déverrouillage 37. Une paroi supérieure 38 relie les parois latérales 32 à proximité de la zone de collecte 30, pour une meilleure rigidité de l'accessoire de versement 7.

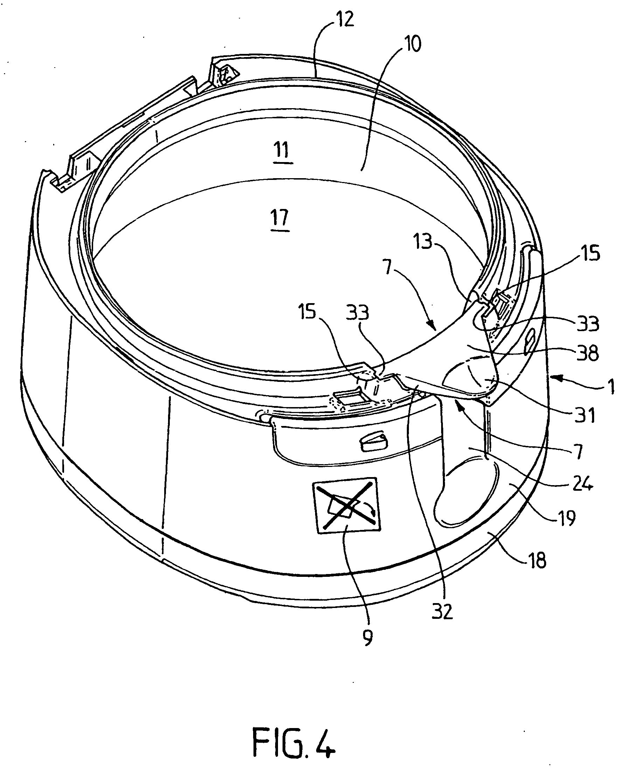

La figure 4 montre la cuve 10 contenant un bain de cuisson 17. Un dispositif indicateur 9 disposé sur le boîtier 1 permet de déconseiller à l'utilisateur le déversement du bain de cuisson tant que sa température est trop élevée. Le dispositif indicateur 9 peut être relié à un capteur de température. Le dispositif indicateur 9 peut aussi présenter un pictogramme réalisé au moins partiellement en matière thermosensible. L'accessoire de versement 7 est monté dans l'échancrure 13. La zone de collecte 30 débouche dans l'échancrure 13. La zone de versement 31 débouche à l'extérieur de la cuve 10 et du boîtier 1. La zone de versement 31 est proéminente par rapport au boîtier 1. La nervure formant la conformation transversale 33 de l'accessoire de versement 7 est insérée dans la rainure formant la conformation longitudinale 15 du boîtier 1. Le crochet 35 est en place sous le ressaut 16, non visibles à la figure 4.

La figure 5 présente plus en détail la construction du boîtier 1, le socle 18 n'étant pas représenté. La jupe 19 est avantageusement réalisée en matériau ne résistant pas en continu à la température du bord de la cuve 10, tel que par exemple le polypropylène. La cuve 10 est associée à des moyens de chauffe électriques 40. La cuve 10 comporte un bord supérieur retourné. Le bord de la cuve 10 repose sur une bague 41. Le rebord 12 appartient à une pièce annulaire 42. La bague 41 et la pièce annulaire 42 sont réalisées en matériau résistant en continu à la température du bord de la cuve 10, tel que par exemple le PBTP. La pièce annulaire 42 prend appui sur le bord supérieur de la cuve 10. La pièce annulaire 42 est montée sur la jupe 19, par exemple par clipsage et/ou par vissage. La figure 5 illustre une patte de clipsage 43 issue de la pièce annulaire 42 et venant en prise avec la jupe 19. Le bord supérieur de la cuve 10 reposant sur la bague 41 est ainsi maintenu entre la jupe 19, sur laquelle repose la bague 41, et la pièce annulaire 42. Le ressaut 16 est ménagé dans la paroi latérale de la pièce annulaire 42. Un joint d'étanchéité annulaire 44, par exemple un joint torique, est interposé entre la cuve 10 et la pièce annulaire 42. La pièce annulaire 42 comporte des nervures 45 pour maintenir le joint 44 contre la cuve 10. Le rebord 12 est plus élevé à proximité de l'échancrure 13 qu'à l'opposé de l'échancrure 13.

Pour vider le bain de cuisson 17 contenu dans la cuve 10, l'utilisateur retire le couvercle 2 ainsi que le dispositif 21 de monte et baisse du panier 20. L'utilisateur met ensuite en place l'accessoire de versement 7 dans l'échancrure 13 du boîtier 1. La nervure formant la conformation 33 de l'accessoire de versement 7 est engagée dans la rainure formant la conformation 15 du boîtier 1, permettant un maintien radial et latéral ainsi qu'une étanchéité de l'accessoire de versement 7 par rapport au boîtier 1. Le crochet 35 monté sur la patte élastique 36 est repoussé par la paroi latérale du boîtier 1 lors de la mise en place de l'accessoire de versement 7. Le crochet 35 vient en place sous le ressaut 16 du boîtier 1.

Ainsi lors du versement l'accessoire de versement 7 est maintenu en place par rapport au boîtier. Le rebord périphérique supérieur 12 permet de guider le bain de cuisson 17 vers la zone de collecte 30 de l'accessoire de versement 7. Le seuil 14 de l'échancrure 13 étant plus élevé que la zone de collecte 30 de l'accessoire de versement 7 mis en place dans l'échancrure 13, l'écoulement du bain de cuisson 17 dans la zone de collecte 30 s'effectue en minimisant les turbulences. Le dispositif indicateur 9 permet de déconseiller à l'utilisateur de verser le contenu de la cuve 10 lorsque la température est trop élevée.

Pour retirer l'accessoire de versement 7, l'utilisateur doit libérer le crochet 35 du ressaut 16. L'utilisateur peut saisir l'accessoire de versement 7 en prenant appui sur la paroi supérieure 38 d'une part et sur la languette de déverrouillage 37 d'autre part. La languette de déverrouillage 37 pivote alors par rapport à l'ancrage de la patte élastique 36 dans la paroi inférieure 34, ce qui dégage le crochet 35 du ressaut 16. L'utilisateur peut alors faire coulisser la conformation transversale 33 de l'accessoire de versement 7 dans la conformation longitudinale 15 du boîtier 1 pour retirer l'accessoire de versement 7 du boîtier 1. La paroi supérieure 38 et la languette de déverrouillage 37 sont à l'écart du chemin d'écoulement du bain de cuisson et ne sont pas salies lors de la vidange de la cuve 10, ce qui facilite la préhension. L'accessoire de versement 7 peut être rangé dans le logement 5 du boîtier 1 fermé par le capot 6.

A titre de variante, l'échancrure 13 n'est pas nécessairement agencée à l'opposé de l'articulation du couvercle 2. L'échancrure 13 n'est pas nécessairement prévue pour recevoir le support 22 du dispositif 21 de monte et baisse du panier 20. L'échancrure 13 peut notamment recevoir un support d'un dispositif d'articulation du couvercle. Le couvercle 2 n'est pas nécessairement monté articulé par rapport au boîtier 1, mais peut être simplement posé sur le boîtier 1. Le couvercle 2 n'est pas nécessairement amovible par rapport au boîtier 1. Le rebord périphérique supérieur 12 présentant l'échancrure 13 n'appartient pas nécessairement au boîtier 1, mais peut notamment appartenir au moins partiellement à la cuve 10. Le capot 6 fermant le logement 5 n'est pas nécessairement amovible. Le logement 5 n'est pas nécessairement ménagé sur le couvercle 2, mais peut notamment être ménagé dans une paroi latérale du boîtier 1. Le crochet de retenue 35 n'est pas nécessairement disposé sous la paroi inférieure 34 de l'accessoire de versement 7, mais peut notamment être disposé sur une paroi latérale. La rainure longitudinale formant la conformation longitudinale 15 du boîtier 1 peut être complétée ou remplacée par une nervure longitudinale, la nervure transversale formant la conformation transversale 33 de l'accessoire de versement étant alors complétée ou remplacée par une rainure transversale. D'autres moyens que les conformations longitudinale 15 et transversale 33 peuvent être envisagés pour assurer le maintien et/ou l'étanchéité de l'accessoire de versement 7 par rapport au rebord 12.

La présente invention n'est nullement limitée à l'exemple de réalisation décrit et à ses variantes, mais englobe de nombreuses modifications dans le cadre des revendications.

## Revendications

1. Appareil électrique de cuisson comportant une cuve (10) montée dans un boîtier (1) présentant une ouverture supérieure (11), un rebord périphérique supérieur (12) entourant l'ouverture supérieure (11), une échancrure (13) étant ménagée dans le rebord périphérique supérieur (12), **caractérisé en ce qu'**il comporte un accessoire de versement (7) amovible susceptible d'être monté dans l'échancrure (13).

2. Appareil électrique de cuisson selon la revendication 1, **caractérisé en ce que** l'accessoire de versement (7) monté dans l'échancrure (13) présente une zone de collecte (30) débouchant dans l'échancrure (13), la zone de collecte (30) communiquant avec une zone de versement (31) débouchant à l'extérieur de la cuve (10) et du boîtier (1).

3. Appareil électrique de cuisson selon la revendication 2, **caractérisé en ce** la zone de versement (31) est proéminente par rapport au boîtier (1) lorsque l'accessoire de versement (7) est monté dans l'échancrure (13).

4. Appareil électrique de cuisson selon l'une des revendications 2 ou 3, **caractérisé en ce** l'accessoire de versement (7) comporte des parois latérales (32) convergeant vers la zone de versement (31).

5. Appareil électrique de cuisson selon la revendication 4, **caractérisé en ce que** les parois latérales (32) sont reliées par une paroi supérieure (38).

6. Appareil électrique de cuisson selon l'une des revendications 2 à 5, **caractérisé en ce que** l'échancrure (13) présente un seuil (14) plus élevé que la zone de collecte (30) de l'accessoire de versement (7) monté dans l'échancrure (13).

7. Appareil électrique de cuisson selon l'une des revendications 1 à 6, **caractérisé en ce que** l'accessoire de versement (7) présente une conformation transversale (33) prévue pour coopérer avec une conformation longitudinale (15) ménagée dans l'échancrure (13).

8. Appareil électrique de cuisson selon l'une des revendications 1 à 7, **caractérisé en ce que** l'accessoire de versement (7) présente un crochet de retenue (35) prévu pour coopérer avec un ressaut (16) ménagé dans une paroi du boîtier (1).

9. Appareil électrique de cuisson selon la revendication 8, **caractérisé en ce qu'**une patte élastique (36) relie le crochet de retenue (35) à une paroi inférieure (34) de l'accessoire de versement (7).

10. Appareil électrique de cuisson selon la revendication 9, **caractérisé en ce qu'**une languette de déverrouillage (37) est montée sur la patte élastique (36).

11. Appareil électrique de cuisson selon l'une des revendications 1 à 10, **caractérisé en ce que** le rebord périphérique supérieur (12) appartient au boîtier (1).

12. Appareil électrique de cuisson selon l'une des revendications 1 à 11, **caractérisé en ce qu'**il comporte un dispositif (21) amovible par rapport au boîtier (1), ledit dispositif comprenant un support (22) susceptible d'être mis en place dans l'échancrure (13).

13. Appareil électrique de cuisson selon l'une des revendications 1 à 12, **caractérisé en ce qu'**il comporte un couvercle (2) prévu pour fermer le boîtier (1).

14. Appareil électrique de cuisson selon la revendication 13, **caractérisé en ce que** le couvercle (2) est monté amovible par rapport au boîtier (1).

15. Appareil électrique de cuisson selon l'une des revendications 13 ou 14, **caractérisé en ce que** le couvercle (2) est monté articulé par rapport au boîtier (1) et **en ce que** l'échancrure (13) est disposée à l'opposé de l'articulation du couvercle (2) par rapport à l'ouverture supérieure (11).

16. Appareil électrique de cuisson selon l'une des revendications 1 à 15, **caractérisé en ce qu'**il comporte un logement (5) prévu pour recevoir l'accessoire de versement (7).

17. Appareil électrique de cuisson selon l'une des revendications 13 à 15, **caractérisé en ce que** le couvercle (2) présente un logement (5) prévu pour recevoir l'accessoire de versement (7).

18. Appareil électrique de cuisson selon la revendication 17, **caractérisé en ce que** le logement (5) est fermé par un capot (6).

## Patentansprüche

1. Elektrisches Gargerät mit einer Wanne (10), die in einem Gehäuse (1) angebracht ist, welches eine obere Öffnung (11) aufweist, wobei ein oberer Umfangsrand (12) die obere Öffnung (11) umgibt, wobei eine Aussparung (13) in dem oberen Umfangsrand (12) ausgebildet ist, **dadurch gekennzeichnet, dass** es ein abnehmbares Ausgießzubehörteil (7) aufweist, das in der Aussparung (13) angebracht sein kann.

2. Elektrisches Gargerät nach Anspruch 1, **dadurch gekennzeichnet, dass** das in der Aussparung (13) angebrachte Ausgießzubehörteil (7) einen Auffangbereich (30) aufweist, der in die Aussparung (13) mündet, wobei der Auffangbereich (30) mit einem Ausgießbereich (31) verbunden ist, der außerhalb der Wanne (10) und des Gehäuses (1) mündet.

3. Elektrisches Gargerät nach Anspruch 2, **dadurch gekennzeichnet, dass** der Ausgießbereich (31) bezüglich des Gehäuses (1) hervorragt, wenn das Ausgießzubehörteil (7) in der Aussparung (13) angebracht ist.

4. Elektrisches Gargerät nach Anspruch 2 oder 3, **dadurch gekennzeichnet, dass** das Ausgießzubehörteil (7) Seitenwände (32) aufweist, die zum Ausgießbereich (31) hin zusammenlaufen.

5. Elektrisches Gargerät nach Anspruch 4, **dadurch gekennzeichnet, dass** die Seitenwände (32) durch eine obere Wand (38) miteinander verbunden sind.

6. Elektrisches Gargerät nach einem der Ansprüche 2 bis 5, **dadurch gekennzeichnet, dass** die Aussparung (13) eine Schwelle (14) aufweist, die höher ist als der Auffangbereich (30) des in der Aussparung (13) angebrachten Ausgießzubehörteils (7).

7. Elektrisches Gargerät nach einem der Ansprüche 1 bis 6, **dadurch gekennzeichnet, dass** das Ausgießzubehörteil (7) eine quer verlaufende Form (33) aufweist, die dazu vorgesehen ist, mit einer in der Aussparung (13) ausgebildeten Längsform (15) zusammenzuwirken.

8. Elektrisches Gargerät nach einem der Ansprüche 1 bis 7, **dadurch gekennzeichnet, dass** das Ausgießzubehörteil (7) einen Haltehaken (35) aufweist, der dazu vorgesehen ist, mit einem in einer Wand des Gehäuses (1) ausgebildeten Vorsprung (16) zusammenzuwirken.

9. Elektrisches Gargerät nach Anspruch 8, **dadurch gekennzeichnet, dass** eine elastische Lasche (36) den Haltehaken (35) mit einer unteren Wand (34) des Ausgießzubehörteils (7) verbindet.

10. Elektrisches Gargerät nach Anspruch 9, **dadurch gekennzeichnet, dass** ein Entriegelungslappen (37) an der elastischen Lasche (36) angebracht ist.

11. Elektrisches Gargerät nach einem der Ansprüche 1 bis 10, **dadurch gekennzeichnet, dass** der obere Umfangsrand (12) dem Gehäuse (1) zugehörig ist.

12. Elektrisches Gargerät nach einem der Ansprüche 1 bis 11, **dadurch gekennzeichnet, dass** es eine bezüglich des Gehäuses (1) abnehmbare Vorrichtung (21) aufweist, die einen Träger (22) aufweist, der in die Aussparung (13) eingesetzt werden kann.

13. Elektrisches Gargerät nach einem der Ansprüche 1 bis 12, **dadurch gekennzeichnet, dass** es einen Deckel (2) aufweist, der zum Verschließen des Gehäuses (1) vorgesehen ist.

14. Elektrisches Gargerät nach Anspruch 13, **dadurch gekennzeichnet, dass** der Deckel (2) bezüglich des Gehäuses (1) abnehmbar angebracht ist.

15. Elektrisches Gargerät nach Anspruch 13 oder 14, **dadurch gekennzeichnet, dass** der Deckel (2) bezüglich des Gehäuses (1) gelenkig angebracht ist und dass die Aussparung (13) bezüglich der oberen Öffnung (11) gegenüber der Anlenkung des Deckels (2) ausgebildet ist.

16. Elektrisches Gargerät nach einem der Ansprüche 1 bis 15, **dadurch gekennzeichnet, dass** es eine Aufnahme (5) aufweist, die dazu vorgesehen ist, das Ausgießzubehörteil (7) aufzunehmen.

17. Elektrisches Gargerät nach einem der Ansprüche 13 bis 15, **dadurch gekennzeichnet, dass** der Deckel (2) eine Aufnahme (5) aufweist, die dazu vorgesehen ist, das Ausgießzubehörteil (7) aufzunehmen.

18. Elektrisches Gargerät nach Anspruch 17, **dadurch gekennzeichnet, dass** die Aufnahme (5) durch eine Abdeckkappe (6) geschlossen ist.

## Claims

1. An electrical cooking appliance comprising a vessel (10) mounted in a housing (1) presenting a top opening (11), a top peripheral rim (12) surrounding the top opening (11), a notch (13) being provided in the top peripheral rim (12), the appliance being **characterized in that** it includes a removable pouring accessory (7) suitable for being mounted in the notch (13).

2. An electrical cooking appliance according to claim 1, **characterized in that** the pouring accessory (7) mounted in the notch (13) presents a collection zone (30) opening out into the notch (13), the collection zone (30) communicating with a pouring zone (31) opening out to the outside of the vessel (10) and of the housing (1).

3. An electrical cooking appliance according to claim 2, **characterized in that** the pouring zone (31) projects relative to the housing (1) when the pouring accessory (7) is mounted in the notch (13).

4. An electrical cooking appliance according to claim 2 or claim 3, **characterized in that** the pouring accessory (7) has side walls (32) converging towards the pouring zone (31).

5. An electrical cooking appliance according to claim 4, **characterized in that** the side walls (32) are connected together by a top wall (38).

6. An electrical cooking appliance according to any one of claims 2 to 5, **characterized in that** the notch (13) presents a threshold (14) that is higher than the collection zone (30) of the pouring accessory (7) mounted in the notch (13).

7. An electrical cooking appliance according to any one of claims 1 to 6, **characterized in that** the pouring accessory (7) presents a transverse shape (33) for co-operating with a longitudinal shape (15) formed in the notch (13).

8. An electrical cooking appliance according to any one of claims 1 to 7, **characterized in that** the pouring accessory (7) presents a retaining hook (35) for co-operating with a step (16) formed in a wall of the housing (1).

9. An electrical cooking appliance according to claim 8, **characterized in that** a resilient tab (36) connects the retaining hook (35) to a bottom wall (34) of the pouring accessory (7).

10. An electrical cooking appliance according to claim 9, **characterized in that** an unlocking tongue (37) is mounted on the resilient tab (36).

11. An electrical cooking appliance according to any one of claims 1 to 10, **characterized in that** the top peripheral rim (12) belongs to the housing (1).

12. An electrical cooking appliance according to any one of claims 1 to 11, **characterized in that** it includes a device (21) that is removable relative to the housing (1), said device comprising a support (22) suitable for being put into place in the notch (13).

13. An electrical cooking appliance according to any one of claims 1 to 12, **characterized in that** it includes a lid (2) for closing the housing (1).

14. An electrical cooking appliance according to claim 13, **characterized in that** the lid (2) is removably mounted relative to the housing (1).

15. An electrical cooking appliance according to claim 13 or claim 14, **characterized in that** the lid (2) is hinged relative to the housing (1) and **in that** the notch (13) is disposed opposite from the hinge of the lid (2) relative to the top opening (11).

16. An electrical cooking appliance according to any one of claims 1 to 15, **characterized in that** it includes a compartment (5) for receiving the pouring accessory (7).

17. An electrical cooking appliance according to any one of claims 13 to 15, **characterized in that** the lid (2) presents a compartment (5) for receiving the pouring accessory (7).

18. An electrical cooking appliance according to claim 17, **characterized in that** the compartment (5) is closed by a cap (6).
